(19) Europäisches Patentamt
European Patent Office
Office européen des brevets

(11) **EP 4 607 230 A1**

(12) **EUROPEAN PATENT APPLICATION**
published in accordance with Art. 153(4) EPC

(43) Date of publication:
**27.08.2025 Bulletin 2025/35**

(21) Application number: **24867599.3**

(22) Date of filing: **23.09.2024**

(51) International Patent Classification (IPC):
**G01R 35/02** (2006.01)    **G01R 31/14** (2006.01)

(52) Cooperative Patent Classification (CPC):
**G01R 31/14; G01R 35/02**

(86) International application number:
**PCT/CN2024/120378**

(87) International publication number:
**WO 2025/061194 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 21.09.2023  CN 202322583013 U
21.09.2023  CN 202311231712
21.09.2023  CN 202322584916 U
21.09.2023  CN 202311230696

(71) Applicant: **Eve Energy Co., Ltd.
Huizhou, Guangdong 516006 (CN)**

(72) Inventors:
• **HU, Jun**
  **Huizhou, Guangdong 516006 (CN)**
• **SHEN, Ruizhang**
  **Huizhou, Guangdong 516006 (CN)**
• **LI, Hanlin**
  **Huizhou, Guangdong 516006 (CN)**
• **YANG, Guanyu**
  **Huizhou, Guangdong 516006 (CN)**
• **HU, Hao**
  **Huizhou, Guangdong 516006 (CN)**

(74) Representative: **Berggren Oy
P.O. Box 16
Eteläinen Rautatiekatu 10A
00101 Helsinki (FI)**

(54) **CIRCUIT RELIABILITY PROCESSING METHOD AND APPARATUS, STORAGE MEDIUM AND ELECTRONIC DEVICE**

(57)    A processing method, a processing apparatus for circuit reliability, a storage medium, and an electronic device are disclosed. The method includes: obtaining a failure rate and a corresponding failure coefficient for each of components; determining a failure expectation value for each of the components based on the failure rate and the corresponding failure coefficient; and comparing a plurality of failure expectation values to identify a component to be modified, and reducing the failure expectation value of the component to be modified based on the failure coefficient of the component to be modified.

```
        ┌─────────────────────────────────────────────┐
        │ Obtaining a failure rate and a corresponding │ ── S100
        │   failure coefficient for each of the first  │
        │       components in the preset circuit;      │
        └─────────────────────────────────────────────┘
                            │
                            ▼
        ┌─────────────────────────────────────────────┐
        │ Determining a failure expectation value for  │ ── S200
        │  each of the first components based on the   │
        │  failure rate and the corresponding failure  │
        │  coefficient of each of the first components;│
        └─────────────────────────────────────────────┘
                            │
                            ▼
        ┌─────────────────────────────────────────────┐
        │ Comparing a plurality of failure expectation │
        │  values to identify a first component to be  │ ── S300
        │ modified in the preset circuit as a target   │
        │ first component, where the target first      │
        │ component is the component to be modified,    │
        │ and replacing the first component with a     │
        │ second component based on the failure        │
        │ coefficient of the target first component.   │
        └─────────────────────────────────────────────┘
```

FIG. 1

EP 4 607 230 A1

**Description**

The present application claims priority to Chinese Patent Applications No. 202311231712.X, 202322584916.3, 202322583013.3, and 202311230696.2, filed with the China National Intellectual Property Administration on September 21, 2023, the entire contents of which are incorporated herein by reference.

TECHNICAL FIELD

The present application relates to the field of battery technology, specifically to a processing method, a processing apparatus for circuit reliability, a storage medium, and an electronic device.

BACKGROUND

In related technology, insulation detection is an important measure to ensure the safe operation of electrical equipment.

In related insulation resistance detection circuits, it is not possible to determine how to modify the circuit to increase its reliability and reduce the possibility of failure of the insulation resistance detection circuit during operation.

SUMMARY

In a first aspect, an embodiment of the present application provides a processing method for circuit reliability, including:

obtaining a failure rate and a corresponding failure coefficient for each of components in a preset circuit;
determining a failure expectation value for each of the components based on the failure rate and the corresponding failure coefficient of each of the components;
comparing a plurality of failure expectation values to identify a component to be modified in the preset circuit, and reducing the failure expectation value of the component to be modified based on the failure coefficient of the component to be modified.

In a second aspect, an embodiment of the present application provides a processing apparatus for circuit reliability, including:

a parameter acquisition module configured to obtain a failure rate and a corresponding failure coefficient for each component in a preset circuit;
a processing module configured to determine a failure expectation value for each component based on the failure rate and the corresponding failure coefficient of each component;
an execution module configured to compare a plurality of failure expectation values, identify a component to be modified in the preset circuit, and reduce the failure expectation value of the component to be modified based on the failure coefficient of the component to be modified.

In a third aspect, an embodiment of the present application provides a storage medium storing a computer program, wherein when the computer program is executed by a processor, it causes the processor to perform the processing method for circuit reliability of any one of the preceding aspects.

In a fourth aspect, an embodiment of the present application provides an electronic device, including a processor and a memory storing a computer program, wherein the processor is configured to execute the computer program to perform the processing method for circuit reliability of any one of the preceding aspects.

ADVANTAGEOUS EFFECTS

In the present application, by obtaining the failure rate and corresponding failure coefficient for each of components in the preset circuit, and determining the failure expectation value for each of the components based on the failure rate and the corresponding failure coefficient of each of the components, reliability of the insulation detection circuit can be quantified using a standardized calculation method. By identifying components that need to be optimized based on a plurality of failure expectation values, and reducing the failure expectation value of the component to be modified, this method can quantify reliability of each of the components in the preset circuit, directly reflecting reliability of each of the components through the magnitude of the failure expectation value. By comparing a plurality of failure expectation values, components having significant impact on reliability of the preset circuit can be identified, thereby

**EP 4 607 230 A1**

focusing circuit modification of the preset circuit on specific components. This provides a more direct and concise improvement direction of the preset circuit, achieving higher reliability of the modified circuit during operation, and addressing the technical problem of reliability quantification and optimization of the insulation detection circuit.

BRIEF DESCRIPTION OF THE DRAWINGS

FIG. 1 is a first flow diagram illustrating a processing method for circuit reliability provided by an embodiment of the present application;
FIG. 2 is a first flow diagram illustrating step S100 provided by an embodiment of the present application;
FIG. 3 is a first flow diagram illustrating an embodiment of step S300 provided by an embodiment of the present application;
FIG. 4 is a flow diagram illustrating step S320 provided by an embodiment of the present application;
FIG. 5 is a second flow diagram illustrating step S300 provided by an embodiment of the present application;
FIG. 6 is a second flow diagram illustrating the processing method for circuit reliability provided by an embodiment of the present application;
FIG. 7 is a first circuit connection diagram of the preset circuit provided by an embodiment of the present application;
FIG. 8 is a first circuit connection diagram of the modified circuit provided by an embodiment of the present application;
FIG. 9 is a third flow diagram illustrating the processing method for circuit reliability provided by an embodiment of the present application;
FIG. 10 is a second flow diagram illustrating step S1000 provided by an embodiment of the present application;
FIG. 11 is a third flow diagram illustrating step S3000 provided by an embodiment of the present application;
FIG. 12 is a fourth flow diagram illustrating the processing method for circuit reliability provided by an embodiment of the present application;
FIG. 13 is a flow diagram illustrating step S6000 provided by an embodiment of the present application;
FIG. 14 is a flow diagram illustrating step S6200 provided by an embodiment of the present application;
FIG. 15 is a fifth flow diagram illustrating the processing method for circuit reliability provided by an embodiment of the present application;
FIG. 16 is a second circuit connection diagram of the preset circuit provided by an embodiment of the present application;
FIG. 17 is a second circuit connection diagram of the modified circuit provided by an embodiment of the present application;
FIG. 18 is a block diagram of a processing apparatus for circuit reliability provided by an embodiment of the present application.

DETAILED DESCRIPTION

In the description of the present application, unless otherwise explicitly specified and limited, the terms "connected", "connection", and "fixed" should be broadly understood. For example, these terms can refer to a fixed connection, a detachable connection, or an integral connection; a mechanical connection or an electrical connection; a direct connection or an indirect connection through an intermediary; or an internal communication or interaction relationship between two elements. Those skilled in the art can understand the specific meaning of the above terms in the present application according to specific contexts.

In the present application, unless otherwise explicitly specified and limited, a first feature being "above" or "under" a second feature may include direct contact between the first and second features, or may include the first and second features not being in direct contact but being connected through other features between them. Moreover, the first feature being "above", "over", or "on" the second feature includes the first feature being directly above or obliquely above the second feature, with the first feature at a higher horizontal level than the second feature. The first feature being "below", "under", or "underneath" the second feature includes the first feature being directly below or obliquely below the second feature, with the first feature at a lower horizontal level than the second feature.

In the description of some embodiments, terms such as "up", "down", "left", "right", "front", "back", and other directional or positional relationships are based on the orientations or positions shown in the drawings. These terms are used for ease of description and simplification of operation, and do not indicate or imply that the referred component or element must have a specific orientation, be constructed in a specific orientation, or operate in a specific orientation. Therefore, they should not be understood as limitations of the present application. Furthermore, the terms "first", "second" are used for descriptive differentiation and have no special meaning.

An embodiment of the present application provides a processing method for circuit reliability, in which

obtaining a failure rate and a corresponding failure coefficient for each component in a preset circuit;

determining a failure expectation value for each component based on the failure rate and the corresponding failure coefficient of each component; and

comparing a plurality of failure expectation values to identify a component to be modified in the preset circuit, and reducing the failure expectation value of the component to be modified based on the failure coefficient of the component to be modified.

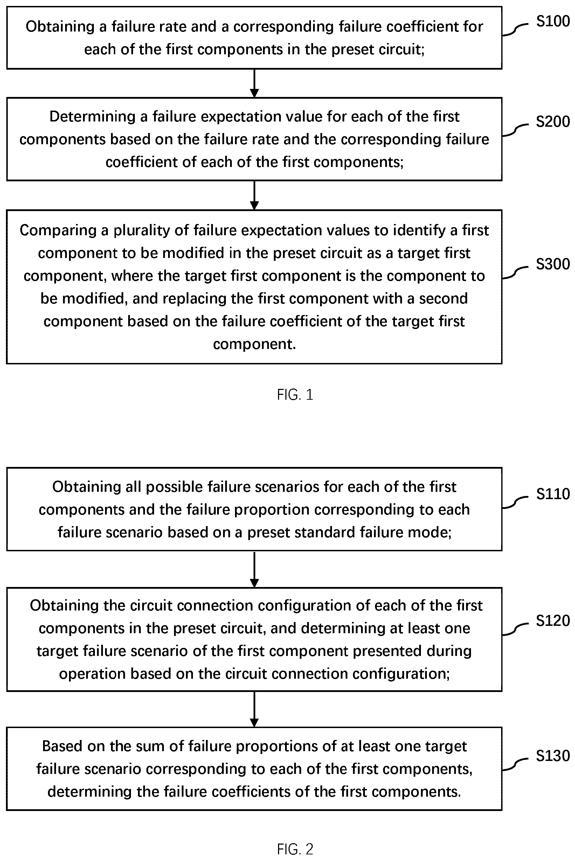

Referring to FIG. 1, in some embodiments, the processing method for circuit reliability includes:

S100: Obtaining a failure rate and a corresponding failure coefficient for each of the first components in the preset circuit;

In some embodiments, the preset circuit is a circuit to be processed, input by the user through devices such as a PC, and the first component is an original component in the preset circuit, that is, a component that has not been replaced.

The failure rate is obtained by the processing device based on existing component failure rate standards. In some embodiments, the standard SN29500 is used, while in other cases, other failure rate standards such as IEC62380 for a component can be used according to actual needs. The failure coefficient is the proportion of possible failure scenarios for each of first components among all failure scenarios. For example, for a switch, all failure scenarios include parameter drift, short-circuit, and open circuit, while in the closed state, possible failure scenarios include parameter drift and short-circuit. In this case, the failure coefficient of the switch is the sum of the probabilities of both parameter drift and short-circuit occurring.

When optimizing the reliability of the first insulation detection circuit, determine the component failure rate standard to be used first, then determine the failure rate of each of the first components in the existing first insulation detection circuit based on the standard. For example, when calculating the failure rates of switches and resistors according to the standard SN29500, the failure rate of switches is 40FIT and the failure rate of resistors is 1.26FIT. The total probability of target failure scenarios for each of the first component is determined as a parameter for calculating the failure scenarios of the first components.

S200: Determining a failure expectation value for each of the first components based on the failure rate and the corresponding failure coefficient of each of the first components;

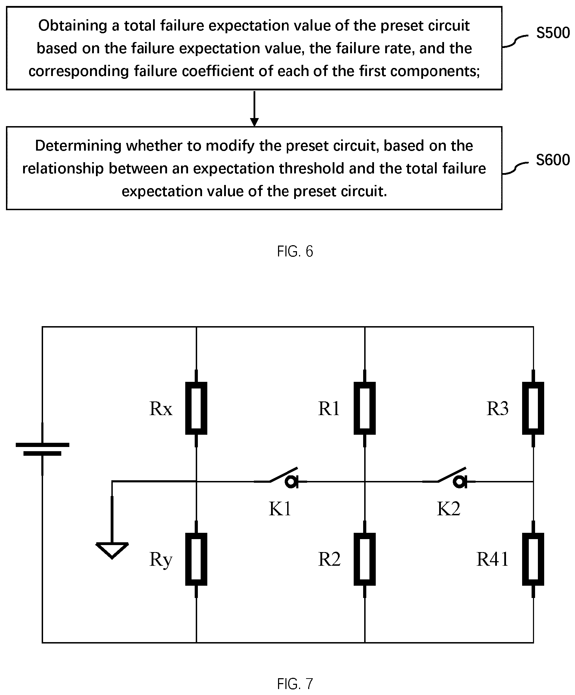

In some embodiments, the failure expectation value is the proportion of the failure scenario of each of the components in the failure scenario of the whole circuit. Taking FIG. 7 as an example, FIG. 7 shows a preset circuit, and the failure expectation value of a first switch K1 in FIG. 7 is calculated as follows: $P_{K1\_1}=a*F_{K1}/(F_{R1}+F_{R2}+a*F_{K1}+b*F_{K2})$, where a is the failure coefficient of the first switch K1, b is the failure coefficient of the second switch K2, $F_{R1}$ is the failure rate of the first resistor R1, $F_{R2}$ is the failure rate of the second resistor R2, $F_{K1}$ is the failure rate of the first switch K1, $F_{K2}$ is the failure rate of the second switch K2, and $(F_{R1}+F_{R2}+a*F_{K1}+b*F_{K2})$ represents the target failure scenario of the whole circuit.

S300: Comparing a plurality of failure expectation values to identify a first component to be modified in the preset circuit as a target first component, where the target first component is the component to be modified, and replacing the first component with a second component based on the failure coefficient of the target first component; where the failure coefficient of the second component is different from that of the first component.

It should be noted that the circuit failure rate is mainly composed of the number of components, intrinsic failure rates, failure modes, and circuit architecture. Due to different component types, components with the same function may have different possible failure scenarios. Taking a reference ambient temperature of 40°C, considering only single point failures, and using Birolini Failure Modes as an example for failure modes, the short-circuit, open circuit, and drift each account for 10%, 50%, and 40% in all failure scenarios of a photo-MOS component respectively; relay short-circuit and functional fault account for 20% and 80% respectively. It can be seen that even with the same switching function, relays and photo-MOS components have different failure scenarios and different failure proportions for each scenario. Therefore, when calculating, the failure coefficients will also be different, resulting in different failure expectation values when applied to the circuit.

In some embodiments, after obtaining the failure rate and the failure coefficient of each component, the failure expectation value of each of the first components is calculated based on these parameters. By comparing a plurality of failure expectation values, it can be determined that first component with higher failure expectation value compared to other first components are more prone to failure. Therefore, processing needs to be performed on the first components with higher failure expectation values. Specifically, when the failure coefficient of the first component is mainly affected by open circuit, modification of the connection relationship between this first component and surrounding first components can be considered, to reduce situations where a plurality of first components of the same type are in the closed state simultaneously.

The technical solution of the present application obtains the failure rate and a corresponding failure coefficient for each of the components in the preset circuit, and determines the failure expectation value for each of the components based on the failure rate and the corresponding failure coefficient of each of the components, quantifying reliability of the first insulation detection circuit through a unified calculation method. By determining the first component that needs to be optimized based on a plurality of failure expectation values and replacing the first component according to the component's failure coefficient, it can quantify reliability of each of the first components in the preset circuit, directly reflecting reliability of each of the first components through the magnitude of the failure expectation value. It can also determine which components in the preset circuit mainly affect reliability of the preset circuit by comparing a plurality of failure expectation values, focusing the modification of the preset circuit on specific components. This provides a more direct and concise improvement direction for modifying the preset circuit, achieving higher reliability of the modified circuit during operation. It addresses the technical problem of being unable to quantify reliability of the first insulation detection circuit and unable to determine how to modify the circuit to increase its reliability.

Referring to FIGs. 1 to 2, in some embodiments, obtaining the failure coefficient corresponding to each component in the preset circuit includes:

> S110: Obtaining all possible failure scenarios for each of the first components and the failure proportion corresponding to each failure scenario based on a preset standard failure mode;

> S120: Obtaining the circuit connection configuration of each of the first components in the preset circuit, and determining at least one target failure scenario of the first component presented during operation based on the circuit connection configuration; and

> S130: Based on the sum of failure proportions of at least one target failure scenario corresponding to each of the first components, determining the failure coefficients of the first components.

In some embodiments, based on the standard failure mode, every possible failure mode for each of the first components is known. However, due to different circuit connection relationships, not every failure mode will occur. For example, for a switch in the open state, although it has three states in the standard failure mode: short-circuit, open circuit, and parameter drift. However, for a switch in the open state, the open circuit will not affect its operation, so that this failure scenario cannot be involved in the calculation. Therefore, when calculating the failure coefficient of each of the components, it is firstly necessary to determine its circuit connection state to identify whether there are failure scenarios that will not affect the operation. The failure scenarios that do affect the operation are designated as target failure scenarios, and the probabilities corresponding to at least one target failure scenario are accumulated as the failure coefficient of the first component.

Furthermore, when the first insulation detection circuit is operating, the operational states of its various components are not always constant. To obtain the resistance values of the positive and negative ground resistances in the first insulation detection circuit, there are typically at least two operational states, and each operational state corresponds to a specific circuit configuration. Therefore, when calculating the failure expectation values of the components in the first insulation detection circuit, it is necessary to calculate the failure expectation values separately for a plurality of operational states.

As shown in FIG. 7, based on the standard SN29500:

> the failure rate of resistors in the preset circuit is: $F_{R1} = F_{R2} = F_{R3} = F_{R41} = 1.26 FIT$;

> the failure rate of switches in the preset circuit is: $F_{K1} = F_{K2} = 40 FIT$;

> the preset circuit includes a first operational state and a second operational state;

> when the preset circuit is in the first operational state, the first switch is in the closed state and the second switch is in the open state; and

> when the preset circuit is in the second operational state, both the first switch and the second switch are in the closed state.

> (1) When the first switch K1 is in the closed state and the second switch K2 is in the open state, the failure of the first insulation detection circuit is calculated as follows:

$$P_{R1\_1}=P_{R2\_1}=F_{R1}/(F_{R1}+F_{R2}+0.9*F_{K1}+0.5*F_{K2})=0.0215;$$

$$P_{K1\_1}=0.9*F_{K1}/(F_{R1}+F_{R2}+0.9*F_{K1}+0.5*F_{K2})=0.6152;$$

and

$$P_{K2\_1}=0.5*F_{R2}/(F_{R1}+F_{R2}+0.9*F_{K1}+0.5*F_{K2})=0.3418.$$

At this time, the total failure expectation value of the preset circuit in the first operational state is:

$$F_1=F_{R1}*P_{R1\_1}+F_{R1}*P_{R2\_1}+0.9*F_{K1}*P_{K1\_1}+0.5*F_{K2}*P_{K2\_1}=29.03738FIT.$$

(2) When both the first switch K1 and the second switch K2 are in the closed state, the failure of the first insulation detection circuit is calculated as follows:

$$P_{R1\_2}=P_{R2\_2}=P_{R3\_2}=P_{R41\_2}=F_{R1}/(F_{R1}+F_{R2}+F_{R3}+F_{R41}+0.9*F_{K1}+0.9*F_{K2})=0.0164;$$

and

$$P_{K1\_2}=P_{K2\_2}=0.9*F_{K1}/(F_{R1}+F_{R2}+F_{R3}+F_{R41}+0.9*F_{K1}+0.9*F_{K2})=0.4672.$$

At this time, the total failure expectation value of the preset circuit in the second operational state is:

$$F_2=F_{R1}*P_{R1\_2}+F_{R2}*P_{R2\_2}+F_{R3}*P_{R3\_2}+F_{R41}*P_{R41}\_2+0.9*F_{K1}*P_{K1\_2}+0.9*F_{K2}*P_{K2\_2}=33.721056FIT.$$

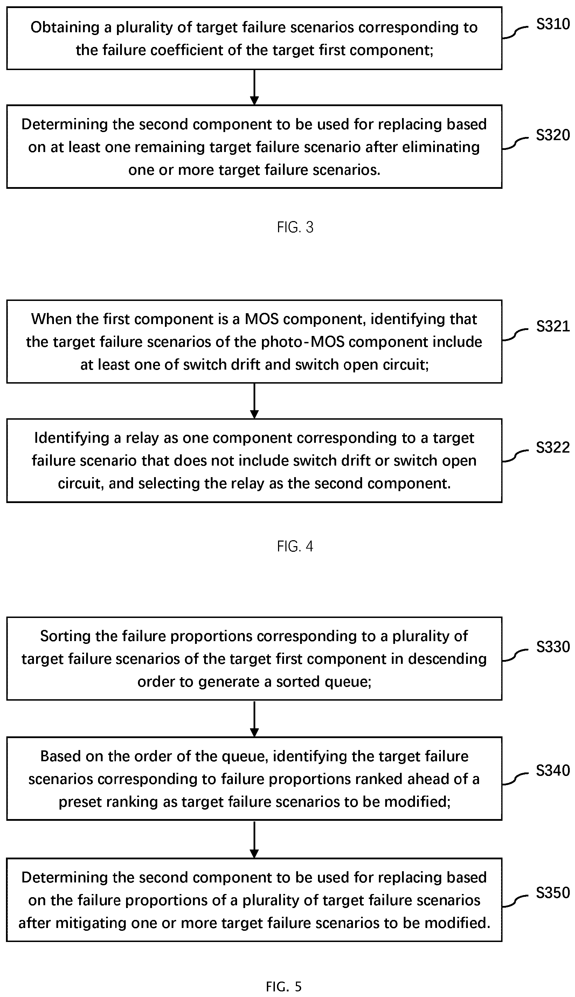

Referring to FIGs. 1 and 3, in some embodiments, replacing the first component with a second component based on the failure coefficient of the first component includes:

S310: Obtaining a plurality of target failure scenarios corresponding to the failure coefficient of the target first component; and

S320: Determining the second component to be used for replacing based on at least one remaining target failure scenario after eliminating one or more target failure scenarios.

In some embodiments, the circuit failure rate is mainly composed of the number of components, intrinsic failure rates, failure modes, and circuit architecture. When calculating the failure expectation value of the first component in the preset circuit, based on the failure coefficient corresponding to the target first component, the target failure scenarios that have a major impact on the value of the failure coefficient are identified and eliminated. Then, the second component is determined from the pre-stored standard failure scenarios based on the remaining target failure scenarios.

Referring to FIGs. 1 and 4, in some embodiments, the target first component is a photo-MOS component, the second component is a relay, and determining the second component to be used for replacing based on a plurality of remaining target failure scenarios after eliminating one or more target failure scenarios includes:

S321: When the first component is a MOS component, identifying that the target failure scenarios of the photo-MOS component include at least one of switch drift and switch open circuit;

S322: Identifying a relay as one component corresponding to a target failure scenario that does not include switch drift or switch open circuit, and selecting the relay as the second component.

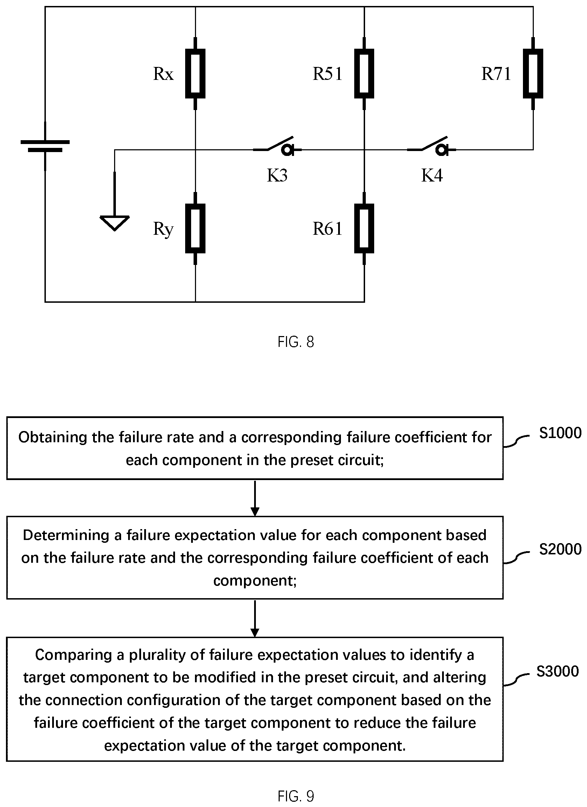

In some embodiments, the optimization of the circuit architecture in FIG. 7 is shown in FIG. 8. Since the coefficient in the calculation of the component failure expectation value of the photo-MOS component is primarily affected by the photo-MOS open circuit and photo-MOS parameter drift, these two main influencing failure scenarios are eliminated. Then based on the remaining short-circuit from the pre-stored standard failure scenarios, a second component is then determined, that is a relay with only two failure scenarios: short-circuit and functional fault.

Based on the failure modes mentioned, relay short-circuit and functional fault account for 20% and 80% respectively. When the relay is in the open state, its target failure scenario only includes the relay short-circuit scenario, and the failure proportion of relay short-circuit is 20%, so the failure coefficient in the failure expectation value of the relay in this state is 0.2. When the relay is in the closed state, its target failure scenario only includes the relay functional fault scenario, and the failure proportion of relay functional fault is 80%, so the failure coefficient in the failure expectation value of the relay in this state is 0.8.

Specifically, (1) when a first relay K3 is in the closed state and a second relay K4 is in the open state, the failure of the first insulation detection circuit is calculated as follows:

$$P_{R51\_1}=P_{R61\_1}=F_{R51}/(F_{R51}+F_{R61}+0.8*F_{K3}+0.2*F_{K4});$$

$$P_{K3\_1}=0.8*F_{K3}/(F_{R51}+F_{R61}+0.8*F_{K3}+0.2*F_{K4});$$

and

$$P_{K4\_1}=0.2*F_{K4}/(F_{R51}+F_{R61}+0.8*F_{K3}+0.2*F_{K4}).$$

(2) When both the first relay K3 and the second relay K4 are in the closed state, the failure of the first insulation detection circuit is calculated as follows:

$$P_{R51\_2}=P_{R61\_2}=P_{R71\_2}=F_{R51}/(F_{R51}+F_{R61}+F_{R71}+0.8*F_{K3}+0.8*F_{K4})=0.2342;$$

and

$$P_{K3\_2}=P_{K4\_2}=0.8*F_{K9}/(F_{R51}+F_{R61}+F_{R71}+0.8*F_{K3}+0.8*F_{K4}).$$

Based on the above expectation value calculation formula, it can be observed that after replacing the photo-MOS component with a relay, the failure coefficients in the failure expectation values of the switch components have all decreased. After the first switch K1 is replaced with the first relay K3, under the same connection configuration, the failure coefficient in the failure expectation value decreases from 0.9 to 0.8, which can significantly reduce the failure expectation value of the switch component at this position.

Furthermore, the failure rate of the second component after replacing in the component failure rate standard must be lower than that of the replaced first component, and the failure coefficients of the second component in different connection states must also be smaller than the failure coefficients of the replaced first component.

Therefore, referring to FIGs. 1 and 8, in some embodiments, after comparing a plurality of failure expectation values and identifying the target first component to be modified in the preset circuit, the method further includes:
replacing the first component with a third component based on the failure rate of the target first component, where the failure rate of the third component is lower than the failure rate of the first component.

The circuit is redesigned based on the above-given design direction and the failure expectation value for each component is recalculated.

Based on the standard SN29500:

the failure rate of resistors in the modified circuit is: $F_{R51}=F_{R61}=F_{R71}=1.26FIT$; and

the failure rate of switches in the modified circuit is: $F_{K3}=F_{K4}=1FIT$.

It can be observed that based on the component failure rate standard, the failure rate of relays is significantly lower than that of photo-MOS components. Therefore, the failure rate of relays can be brought into the above failure expectation value formula:

(1) When the first relay K3 is in the closed state and the second relay K4 is in the open state, the failure of the first insulation detection circuit is calculated as follows:

$$P_{R51\_1}=P_{R61\_1}=F_{R51}/(F_{R51}+F_{R61}+0.8*F_{K3}+0.2*F_{K4})=0.3580;$$

$$P_{K3\_1}=0.8*F_{K3}/(F_{R51}+F_{R61}+0.8*F_{K3}+0.2*F_{K4})=0.2272;$$

and

$$P_{K4\_1}=0.2*F_{K4}/(F_{R51}+F_{R61}+0.8*F_{K3}+0.2*F_{K4})=0.0568.$$

At this time, the total failure expectation value of the preset circuit in the first operational state is:

$$F_3=F_{R51}*P_{R51\_1}+F_{R61}*P_{R61\_1}+0.8*F_{K3}*P_{K3\_1}+0.2*F_{K4}*P_{K4\_1}=1.09528FIT.$$

(2) When both the first relay K3 and the second relay K4 are in the closed state, the failure of the first insulation detection circuit is calculated as follows:

$$P_{R51\_2}=P_{R61\_2}=P_{R71\_2}=F_{R51}/(F_{R51}+F_{R61}+F_{R71}+0.8*F_{K3}+0.8*F_{K4})=0.2342;$$

$$P_{K3\_2}=P_{K4\_2}=0.9*F_{K9}/(F_{R51}+F_{R61}+F_{R71}+0.8*F_{K3}+0.8*F_{K4})=0.1487;$$

and
at this time, the total failure expectation value of the preset circuit in the first operational state is:

$$F_4=F_{R51}*P_{R51\_2}+F_{R61}*P_{R61\_2}+F_{R71}*P_{R71\_2}+0.8*F_{K3}*P_{K3\_2}+0.8*F_{K4}*P_{K4\_2}=1.12320FIT.$$

Based on the above calculation results, it can be observed that for individual components, $P_{K1\_1}>P_{K3\_1}$, $P_{K2\_1}>P_{K4\_1}$, $P_{K2\_1}>P_{K3\_2}$, $P_{K2\_2}>P_{K4\_2}$, indicating that the failure expectation value of each switch component at each position has significantly decreased. For the circuit as a whole, $F_1>F_3$, $F_2>F_4$, demonstrating that the total failure expectation value of the circuit has also significantly decreased, thereby improving the overall reliability of the circuit and reducing the possibility of circuit failure.

Referring to FIGs. 1 and 5, in some embodiments, replacing the first component with a second component based on the failure scenarios in the failure coefficient of the first component includes:

S330: Sorting the failure proportions corresponding to a plurality of target failure scenarios of the target first component in descending order to generate a sorted queue;
S340: Based on the order of the queue, identifying the target failure scenarios corresponding to failure proportions ranked ahead of a preset ranking as target failure scenarios to be modified; and
S350: Determining the second component to be used for replacing based on the failure proportions of a plurality of target failure scenarios after mitigating one or more target failure scenarios to be modified.

In some embodiments, components of the same type but with different manufacturing processes have different failure proportions. Therefore, after obtaining the failure expectation value of each component, these failure expectation values are sorted in descending order to determine which components in the preset circuit have a relatively great impact on the circuit, so that these components can be processed by selecting components with different process types. Among components with the same function, if there exists a component with one or more target failure scenarios to be modified that are lower than those of the target first component, it is selected as the second component to replace the corresponding target first component. Specifically, for example, in the first insulation detection circuit of FIG. 7, when the preset circuit is in the first operational state, $P_{R1\_1}=P_{R2\_1}=0.0215$, $P_{K1\_1}=0.6152$, $P_{K2\_1}=0.3418$, and the failure expectation value ranking is $P_{K1\_1}>P_{K2\_1}>P_{R1\_1}=P_{R2\_1}$. When the preset circuit is in the second operational state,

$P_{R1\_2}=P_{R2\_2}=P_{R3\_2}=P_{R41\_2}=0.0164$, $P_{K1\_2}=P_{K2\_2}=0.4672$, and the failure expectation value ranking is $P_{K1\_2}=P_{K2\_2}>Pa_{1\_2}=P_{R2\_2}=P_{R3\_2}=P_{R41\_2}$.

Therefore, based on the above failure expectation value ranking of the first component, the first switch K1 is typically selected for replacement. Similarly, to further reduce the total failure expectation value of the circuit, both the first switch K1 and the second switch K2, which rank first in the second state, can be replaced simultaneously.

It should be noted that the preset ranking can be related to the number of first components in the preset circuit, and/or the number of the components with relatively high expectation values. When there are more components in the preset circuit, the preset number and preset ranking can be higher. Similarly, when there are more components with high expectation values, the preset number and preset ranking can be higher.

Referring to FIGs. 1 and 6, in some embodiments, after determining the failure expectation value for each of the first components based on the failure rate and the corresponding failure coefficient of each of the first components, the method further includes:

S500: Obtaining a total failure expectation value of the preset circuit based on the failure expectation value, the failure rate, and the corresponding failure coefficient of each of the first components; and

S600: Determining whether to modify the preset circuit, based on the relationship between an expectation threshold and the total failure expectation value of the preset circuit.

In some embodiments, since the circuit of the input device may or may not need modification and in some cases may already have high reliability, it is necessary to first determine the total failure expectation value of the circuit of the input device and pre-store an expectation threshold in the device. The expectation threshold serves as the critical value for classifying the total failure expectation value. For example, when the total failure expectation value is lower than the expectation threshold, the circuit may not need modification.

Herein, the first total failure expectation value of the optimized circuit is determined based on the failure rate, failure expectation value, and failure coefficient corresponding to a plurality of first components; and the second total failure expectation value of the optimized circuit is determined based on the failure rate, failure expectation value, and failure coefficient corresponding to a plurality of first components, as well as the failure rate, failure expectation value, and failure coefficient corresponding to at least one replacing second component.

Please refer to FIG. 9, which illustrates a flow chart of the processing method for circuit reliability provided by an embodiment of the present application.

S1000: Obtaining the failure rate and a corresponding failure coefficient for each component in the preset circuit; In some embodiments, the preset circuit is a circuit to be processed, input by the user through devices such as a PC.

The failure rate is obtained by the user based on existing component failure rate standards. In some embodiments, the standard SN29500 is used, while in other cases, other component failure rate standards such as IEC62380 can be used according to actual needs. The failure coefficient is the proportion of possible target failure scenarios for each component among all failure scenarios. For example, for a switch, all failure scenarios include parameter drift, short-circuit, and open circuit, while in the open state, possible target failure scenarios include parameter drift and short-circuit. In this case, the designated failure coefficient of the switch is the sum of the probabilities of parameter drift and short-circuit occurring.

When optimizing the reliability of the second insulation detection circuit, determine the component failure rate standard to be used first, then determine the failure rate of each component in the existing second insulation detection circuit based on the standard. For example, when calculating the failure rate of switches and resistors according to the standard SN29500, the failure rate of switches is 40FIT and the failure rate of resistors is 1.26FIT. The total probability of target failure scenarios that will occur for each component is determined as a parameter for calculating the component failure scenarios.

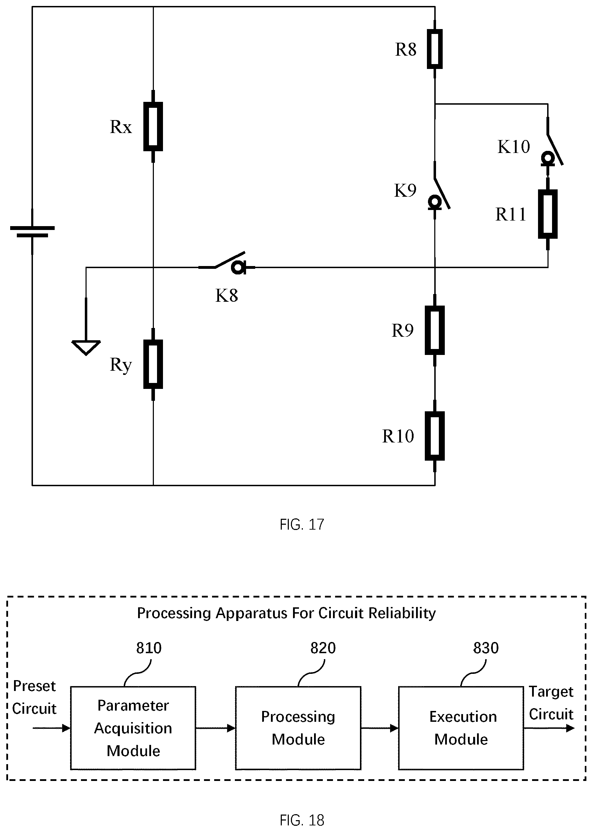

S2000: Determining a failure expectation value for each component based on the failure rate and the corresponding failure coefficient of each component; In some embodiments, the failure expectation value is the proportion of the target failure scenarios of each component among the target failure scenarios of the whole circuit. Taking FIG. 17 as an example, which shows the second insulation detection circuit before improvement, the failure expectation value of a fifth switch K5 in FIG. 8 is calculated as follows: $P_{K5\_1}=a*F_{K5}/(F_{R4}+F_{R5}+F_{R6}+F_{R7}+a*F_{K5}+b*F_{K6}+c*F_{K7})$, where a is the failure coefficient of the fifth switch K5, b is the failure coefficient of a sixth switch K6, c is the failure coefficient of a seventh switch K7, $F_{R4}$ is the failure rate of a fourth resistor R4, $F_{R5}$ is the failure rate of a fifth resistor R5, $F_{R6}$ is the failure rate of a sixth resistor R6, $F_{R7}$ is the failure rate of a seventh resistor R7, $F_{K5}$ is the failure rate of the fifth switch K5, $F_{K6}$ is the failure rate of the sixth switch K6, $F_{K7}$ is the failure rate of the seventh switch K7, and $(F_{R4}+F_{R5}+F_{R6}+F_{R7}+a*F_{K5}+b*F_{K6}+c*F_{K7})$ represents the target failure scenario of the whole circuit.

S3000: Comparing a plurality of failure expectation values to identify a target component to be modified in the preset circuit, and altering the connection configuration of the target component based on the failure coefficient of the target component to reduce the failure expectation value of the target component.

It should be noted that the circuit failure rate is mainly composed of the number of components, intrinsic failure rates, failure modes, and circuit architecture. Components of the same type may have different possible target failure scenarios due to different connection relationships. Taking a case with a reference ambient temperature of 40°C and considering only single point failures as an example, in all failure scenarios of a photo-MOS component, short-circuit accounts for 10%, open circuit accounts for 50%, and drift accounts for 40% respectively. Even for the same photo-MOS component, its failure proportions differ between open-circuit and short-circuit scenarios, thus resulting in different failure coefficients during calculation. Consequently, when the components are applied in the circuit, different failure expectation values will be obtained.

In some embodiments, after obtaining the failure rate and failure coefficient of each component, the failure expectation value of each component is calculated based on these parameters. By comparing a plurality of failure expectation values, components with relatively high failure expectation values can be identified, as these components are more prone to failure and thus require processing. For components whose failure coefficients are mainly affected by open circuit, their connection relationships with surrounding components can be modified to reduce occurrences where a plurality of components of the same type are simultaneously in the closed state.

The technical solution of the present application improves the reliability of the preset circuit through the following steps: first, obtaining the failure rate and corresponding failure coefficient for each component in the preset circuit, thereby determining the failure expectation value of each component to quantify the reliability of the second insulation detection circuit through a unified calculation method; second, identifying components that need optimization based on a plurality of failure expectation values, and modifying their connection relationships with surrounding components according to their failure modes. This method can quantify the reliability of each component in the preset circuit, directly reflecting component reliability through the magnitude of failure expectation values. By comparing a plurality of failure expectation values, components that mainly affect the reliability of the preset circuit can be identified, thereby focusing modifications on specific component connection relationships. This provides a more direct and concise improvement direction, achieving higher operational reliability of the modified circuit, and solving the technical problems of being unable to quantify the reliability of the second insulation detection circuit and unable to determine how to improve circuit reliability.

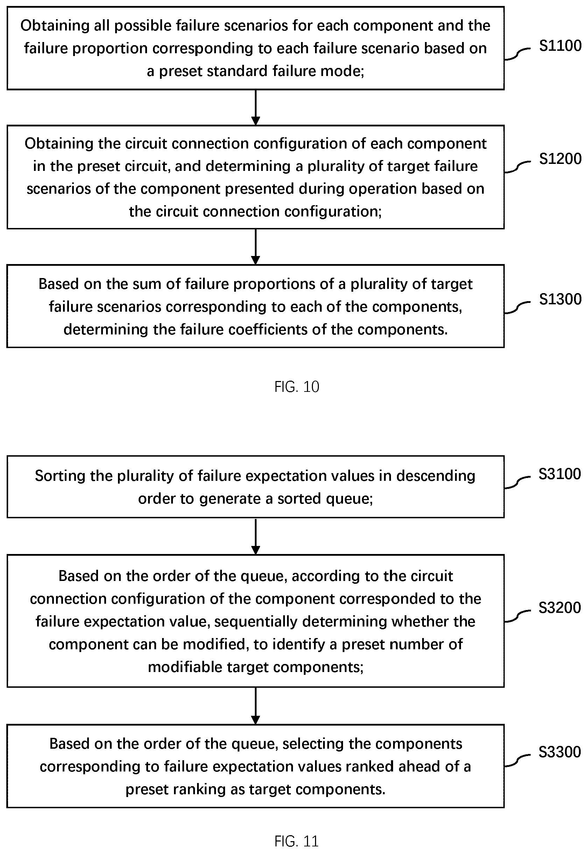

Referring to FIGs. 9 and 10, in some embodiments, obtaining the failure coefficient corresponding to each component in the preset circuit includes:

S1100: Obtaining all possible failure scenarios for each component and the failure proportion corresponding to each failure scenario based on a preset standard failure mode;

S1200: Obtaining the circuit connection configuration of each component in the preset circuit, and determining a plurality of target failure scenarios of the component presented during operation based on the circuit connection configuration; and

S1300: Based on the sum of failure proportions of a plurality of target failure scenarios corresponding to each of the components, determining the failure coefficients of the components.

In some embodiments, every possible failure mode for each component can be known based on standard failure modes. However, due to different circuit connections, not every failure mode will occur. For example, for a switch in the open state, although it has three failure states in the standard failure mode: short-circuit, open circuit, and parameter drift, the switch open circuit will not affect its operation, therefore this failure state does not need to be included in the failure coefficient calculation. Therefore, when calculating the failure coefficient of each component, it is necessary to first determine its circuit connection state to identify which failure states will not affect the operation. The failure states that will affect the operation are designated as target failure states, and the sum of the probabilities corresponding to these target failure states is used as the failure coefficient of the component.

When the second insulation detection circuit is operating, the operational states of its various components are not always constant. To obtain the resistance values of the positive and negative ground resistances in the second insulation detection circuit, there are typically at least two operational states, and each operational state corresponds to a specific circuit configuration. Therefore, when calculating the failure expectation values of the components in the second insulation detection circuit, it is necessary to calculate the failure expectation values separately for a plurality of operational states.

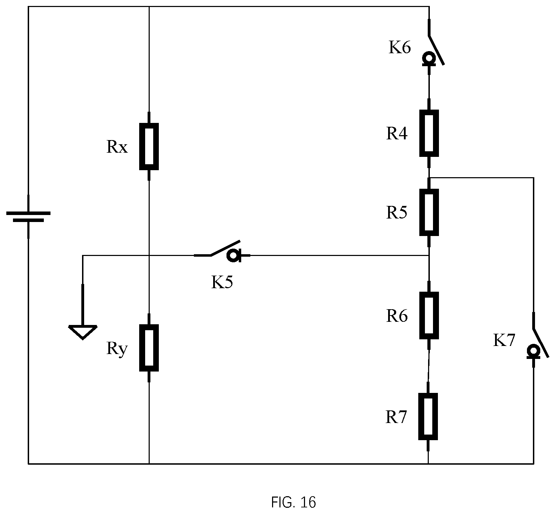

As shown in FIG. 16, based on the standard SN29500:

the failure rate of resistors in the preset circuit is: $F_{R4}=F_{R5}=F_{R6}=F_{R7}=1.26$FIT;

the failure rate of switches in the preset circuit is: $F_{K5}=F_{K6}=F_{K7}=40$FIT;

the preset circuit includes a first operational state and a second operational state;

when the preset circuit is in the first operational state, the first switch is in the closed state and the second switch is in the open state; and

when the preset circuit is in the second operational state, both the first switch and the second switch are in the closed state.

(1) When the fifth switch K5 and the sixth switch K6 are in the closed state, and the seventh switch K7 is in the open state, the failure of the second insulation detection circuit is calculated as follows:

$$P_{R4\_1}=P_{R5\_1}=P_{R6\_1}=P_{R7\_1}=F_{R4}/(F_{R4}+F_{R5}+F_{R6}+F_{R7}+0.9*F_{K5}+0.9*F_{K6}+0.5*F_{K7})=0.013;$$

$$P_{K5\_1}=P_{K6\_1}=0.9*F_{K5}/(F_{R4}+F_{R5}+F_{R6}+F_{R7}+0.9*F_{K5}+0.9*F_{K6}+0.5*F_{K7})=0.371;$$

and

$$P_{K7\_1}=0.5*F_{K7}/(F_{R4}+F_{R5}+F_{R6}+F_{R7}+0.9*F_{K5}+0.9*F_{K6}+0.5*F_{K7})=0.206;$$

(2) When the fifth switch K5 and the seventh switch K7 are in the closed state, and the sixth switch K6 is in the open state, the failure of the second insulation detection circuit is calculated as follows:

$$P_{R5\_2}=P_{R6\_2}=P_{R7\_2}=F_{R4}/(F_{R5}+F_{R6}+F_{R7}+0.9*F_{K5}+0.5*F_{K6}+0.9*F_{K7})=0.0132;$$

$$P_{K5\_2}=P_{K6\_2}=0.9*F_{K5}/(F_{R5}+F_{R6}+F_{R7}+0.9*F_{K5}+0.5*F_{K6}+0.9*F_{K7})=0.3758;$$

and

$$P_{K7\_2}=0.5*F_{K7}/(F_{R5}+F_{R6}+F_{R7}+0.9*F_{K5}+0.5*F_{K6}+0.9*F_{K7})=0.2088.$$

Referring to FIGs. 9, 10, and 16, in some embodiments, comparing a plurality of failure expectation values includes:

S3100: Sorting the plurality of failure expectation values in descending order to generate a sorted queue;
S3200: Based on the order of the queue, according to the circuit connection configuration of the component corresponded to the failure expectation value, sequentially determining whether the component can be modified, to identify a preset number of modifiable target components; and/or,
S3300: Based on the order of the queue, selecting the components corresponding to failure expectation values ranked ahead of a preset ranking as target components.

In some embodiments, when a component has a higher failure expectation value compared to other components, it indicates that this component is more likely to fail and malfunction. Therefore, after obtaining the failure expectation value of each component, it is necessary to sort these failure expectation values in descending order to determine which components in the preset circuit have a relatively great impact on the circuit, and then a processing against these components is implemented. Specifically, for example, in the second insulation detection circuit of FIG. 8, when the preset circuit is in the first operational state, $P_{R4\_1}=P_{R5\_1}=P_{R6\_1}=P_{R7\_1}=0.013$, $P_{K5\_1}=P_{K6\_1}=0.371$, $P_{K7\_1}=0.206$, and at this time the failure expectation value ranking is $P_{K5\_1}=P_{K6\_1}>P_{K7\_1}>P_{R4\_1}=P_{R5\_1}=P_{R6\_1}=P_{R7\_1}$. When the preset circuit is in the second operational state, $P_{R4\_2}=P_{R5\_2}=P_{R6\_2}=P_{R7\_2}=0.0132$, $P_{K5\_2}=P_{K6\_2}=0.3758$, $P_{K7\_2}=0.2088$, and at this time the failure expectation value ranking is $P_{K5\_2}=P_{K6\_2}>P_{K7\_2}>P_{R4\_2}=P_{R5\_2}=P_{R6\_2}=P_{R7\_2}$.
Since not each component in the preset circuit can be relocated, as in the above embodiment where the failure expectation value ranking is determined as $P_{K5\_1}=P_{K6\_1}>P_{K7\_1}>P_{R4\_1}=P_{R5\_1}=P_{R6\_1}=P_{R7\_1}$, the fifth switch K5 cannot be structurally adjusted due to circuit function limitations. Therefore, the focus shifts to the sixth switch K6 and the seventh switch K7, which have relatively high failure proportions.

It should be noted that the preset number and preset ranking can be related to the number of components in the preset circuit, and/or the number of components with high expectation values. When there are more components in the preset circuit, the preset number and preset ranking can be higher. Similarly, when there are more components with high expectation values, the preset number and preset ranking can be higher.

Referring to FIGs. 9 to 17, altering the connection configuration of the target component based on the failure coefficient of the target component specifically includes:

modifying the connection configuration between the target component and surrounding components based on the failure proportion of the target failure scenarios of the component.

In some embodiments, since the fifth switch K5 cannot be structurally adjusted due to circuit function limitations, the circuit structure of the sixth switch K6 and the seventh switch K7 will be optimized. The sixth switch K6 and the seventh switch K7 are optimized into a parallel structure as shown by the ninth switch K9 and the tenth switch K10 in FIG. 9, reducing the component failure states of the sixth switch K6 and the seventh switch K7.

The circuit failure rate is mainly determined by the number of components, intrinsic failure rates, failure modes, and circuit architecture. The circuit architecture shown in FIG. 8 is optimized to obtain the optimized circuit architecture shown in FIG. 9. The optimized circuit architecture is compatible with both balanced and unbalanced bridge methods. When the ninth switch K9 experiences an open circuit failure, insulation detection can be performed by switching the tenth switch K10 into a balanced bridge method. Similarly, when the tenth switch K10 experiences an open circuit failure, insulation detection can be performed by switching the ninth switch K9 into an unbalanced bridge method, thereby increasing reliability of the second insulation detection circuit.

The circuit is redesigned based on the above-given design direction and recalculate the failure expectation value of each component.

Based on the standard SN29500:

the failure rate of resistors in the modified circuit is: $F_{R8}=F_{R9}=F_{R10}=F_{R11}=1.26FIT$; and

the failure rate of switches in the modified circuit is: $F_{K8}=F_{K9}=F_{K10}=40FIT$;

In some embodiments, when the modified circuit is configured as an unbalanced detection bridge:

(1) When the unbalanced detection bridge is in the first operational state, an eighth switch K8 and the ninth switch K9 are in the closed state; the tenth switch K10 is in the open state; the failure modes of the eighth resistor, the ninth resistor, the tenth resistor, and the eleventh resistor all include resistor open circuit and resistor parameter drift; the failure modes of the eighth switch K8 include switch open circuit and switch parameter drift; the failure mode of the ninth switch K9 includes switch parameter drift; and the failure mode of the tenth switch K10 includes switch short-circuit.

At this time, the failure of the second insulation detection circuit is calculated as follows:

$$P_{R8\_1}=P_{R9\_1}=P_{R10\_1}=F_{R8}/(F_{R8}+F_{R9}+F_{R10}+0.9*F_{K8}+0.4*F_{K9}+0.1*F_{K10})=0.0211;$$

$$P_{K8\_1}=0.9*F_{K8}/(F_{R8}+F_{R9}+F_{R10}+0.9*F_{K8}+0.4*F_{K9}+0.1*F_{K10})=0.6022;$$

$$P_{K9\_1}=0.4*F_{K8}/(F_{R8}+F_{R9}+F_{R10}+0.9*F_{K8}+0.4*F_{K9}+0.1*F_{K10})=0.2676;$$

$$P_{K10\_1}=0.1*F_{K8}/(F_{R8}+F_{R9}+F_{R10}+0.9*F_{K8}+0.4*F_{K9}+0.1*F_{K10})=0.0669;$$

(2) When the unbalanced detection bridge is in the second operational state, the eighth switch K8 is in the closed state; the ninth switch K9 and the tenth switch K10 are in the open state; the failure modes of the eighth resistor, the ninth resistor, the tenth resistor, and the eleventh resistor all include resistor open circuit and resistor parameter drift; the failure modes of the eighth switch K8 include switch open circuit and switch parameter drift; and the failure modes of both the ninth switch K9 and the tenth switch K10 include switch short-circuit and switch parameter drift.

At this time, the failure of the second insulation detection circuit is calculated as follows:

$$P_{R9\_2}=P_{R10\_2}=F_{R9}/(F_{R9}+F_{R10}+0.9*F_{K8}+0.5*F_{K9}+0.5*F_{K10})=0.016;$$

$$P_{K8\_2}=0.9*F_{K8}/(F_{R9}+F_{R10}+0.9*F_{K8}+0.5*F_{K9}+0.5*F_{K10})=0.4586;$$

$$P_{K9\_2}=P_{K10\_2}=0.5*F_{K9}/(F_{R9}+F_{R10}+0.9*F_{K8}+0.5*F_{K9}+0.5*F_{K10})=0.2547.$$

In another embodiment, when the modified circuit is configured as a balanced detection bridge:

(1) When the balanced detection bridge is in the first operational state, the eighth switch K8 and the tenth switch K10 are in the closed state; the ninth switch K9 is in the open state; the failure modes of the eighth resistor, the ninth resistor, the tenth resistor, and the eleventh resistor all include resistor open circuit and resistor parameter drift; the failure modes of the eighth switch K8 include open circuit and parameter drift; the failure mode of the ninth switch K9 includes switch short-circuit; and the failure mode of the tenth switch K10 includes switch parameter drift;

At this time, the failure of the second insulation detection circuit is calculated as follows:

$$P_{R8\_3}=P_{R9\_2}=P_{R10\_2}=P_{R11\_2}=F_{R8}/(F_{R8}+F_{R9}+F_{R10}+F_{R11}+0.9*F_{K8}+0.1*F_{K9}+0.4*F_{K10})=0.0206;$$

$$P_{K8\_3}=0.9*F_{K8}/(F_{R8}+F_{R9}+F_{R10}+F_{R11}+0.9*F_{K8}+0.1*F_{K9}+0.4*F_{K10})=0.5898;$$

$$P_{K9\_3}=0.1*F_{K8}/(F_{R8}+F_{R9}+F_{R10}+F_{R11}+0.9*F_{K8}+0.1*F_{K9}+0.4*F_{K10})=0.0655;$$

and

$$P_{K10\_3}=0.4*F_{K8}/(F_{R8}+F_{R9}+F_{R10}+F_{R11}+0.9*F_{K8}+0.1*F_{K9}+0.4*F_{K10})=0.0419.$$

(2) When the balanced detection bridge is in the second operational state, the eighth switch K8 is in the closed state; the ninth switch K9 and the tenth switch K10 are in the open state; the failure modes of the eighth resistor, the ninth resistor, the tenth resistor, and the eleventh resistor all include resistor open circuit and resistor parameter drift; the failure modes of the eighth switch K8 include switch open circuit and switch parameter drift; and the failure modes of both the ninth switch K9 and the tenth switch K10 include switch short-circuit and switch parameter drift.

At this time, the failure of the second insulation detection circuit is calculated as follows:

$$P_{R9\_4}=P_{R10\_2}=F_{R9}/(F_{R9}+F_{R10}+0.9*F_{K8}+0.5*F_{K9}+0.5*F_{K10})=0.016;$$

$$P_{K8\_4}=0.9*F_{K8}/(F_{R9}+F_{R10}+0.9*F_{K8}+0.5*F_{K9}+0.5*F_{K10})=0.4586;$$

and

$$P_{K9\_4}=P_{K10\_2}=0.5*F_{K9}/(F_{R9}+F_{R10}+0.9*F_{K8}+0.5*F_{K9}+0.5*F_{K10})=0.2547.$$

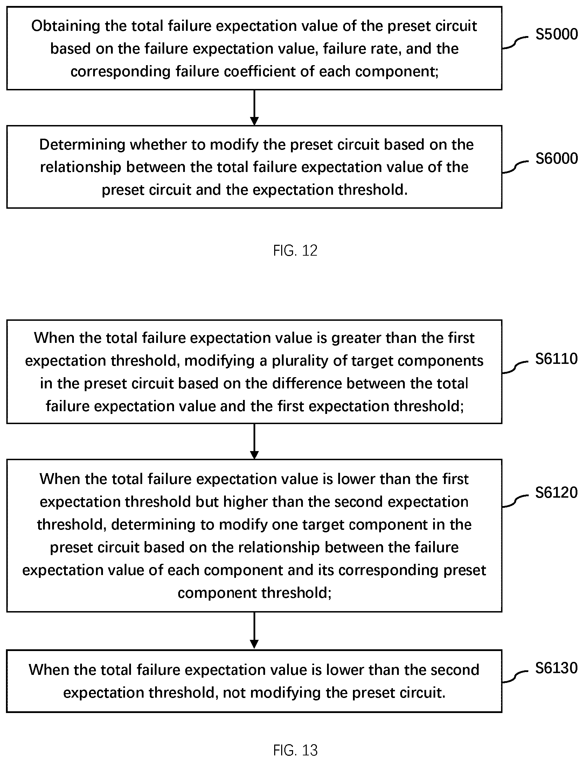

Referring to FIGs. 9 and 12, in some embodiments, after determining the failure expectation value for each component based on the failure rate and the corresponding failure coefficient of each component, the method further includes:

S5000: Obtaining the total failure expectation value of the preset circuit based on the failure expectation value, failure rate, and the corresponding failure coefficient of each component;
S6000: Determining whether to modify the preset circuit based on the relationship between the total failure expectation value of the preset circuit and the expectation threshold.

In some embodiments, since the circuit of the input device may not necessarily need modification and may have high reliability in some cases, it is necessary to first determine the total failure expectation value of the circuit of the input device and pre-store an expectation threshold in the device. This expectation threshold serves as a critical value for classifying the total failure expectation value. For example, when the total failure expectation value is lower than the expectation threshold, the circuit may not need modification.

The first total failure expectation value of the preset circuit is determined based on the failure rate, failure expectation value, and failure coefficient corresponding to a plurality of components; and

the second total failure expectation value of the preset circuit is determined based on the failure rate, failure expectation value, and failure coefficient corresponding to a plurality of components, as well as the failure rate, failure expectation value, and failure coefficient corresponding to at least one second component after replacing.

In the preset circuit of FIG. 8, the total failure expectation value in its first operational state is:

$$F_1 = F_{R1}*P_{R\_1} + F_{R2}*P_{R2\_1} + F_{R3}*P_{R3\_1} + F_{R4}*P_{R4\_1} + 0.9*F_{K5}*P_{K5\_1} + 0.9*F_{K6}*P_{K6\_1} + 0.5*F_{K7}*P_{K7\_1} = 30.89\ 752FIT;\ and$$

the total failure expectation value in its second operational state is:

$$F_2 = F_{R2}*P_{R2\_2} + F_{R3}*P_{R3\_2} + F_{R4}*P_{R4\_2} + 0.9*F_{K5}*P_{K5\_2} + 0.5*F_{K6}*P_{K6\_2} + 0.9*F_{K7}*P_{K7\_2} = 31.283496FIT.$$

Based on this, the total failure expectation value of the modified circuit can be obtained:

in some embodiments, when the modified circuit is configured as an unbalanced detection bridge, the total failure expectation value in its first operational state is:

$$F_3 = F_{R8}*P_{R8\_1} + F_{R9}*P_{R9\_1} + F_{R10}*P_{R10\_1} + 0.9*F_{K8}*P_{K8\_1} + 0.4*F_{K9}*P_{K9\_1} + 0.1*F_{K10}*P_{K10\_1} = 28.426558FI\ T.$$

The total failure expectation value in its second operational state is:

$$F_4 = F_{R9}*P_{R9\_2} + F_{R10}*P_{R10\_2} + 0.9*F_{K8}*P_{K8\_2} + 0.5*F_{K9}*P_{K9\_2} + 0.5*F_{K10}*P_{K10\_2} = 21.64392FIT.$$

In another embodiment, when the modified circuit is configured as a balanced detection bridge, the total failure expectation value in its first operational state is:

$$F_5 - F_{R8}*P_{R8\_3} + F_{R9}*P_{R9\_3} + F_{R10}*P_{R10\_3} + 0.9*F_{K8}*P_{K8\_3} + 0.1*F_{K9}*P_{K9\_3} + 0.4*F_{K10}*P_{K10\_3} = 22.243068FI\ T.$$

The total failure expectation value in its second operational state is:

$$F_6 = F_{R9}*P_{R9\_4} + F_{R10}*P_{R10\_4} + 0.9*F_{K8}*P_{K8\_4} + 0.5*F_{K9}*P_{K9\_4} + 0.5*F_{K10}*P_{K10\_4} = 21.64392FIT.$$

Therefore, it can be concluded that $F_5 < F_3 < F_1$, $F_6 = F_4 < F_2$; that is, regardless whether the modified circuit is configured as a balanced detection bridge or an unbalanced detection bridge, its total failure expectation value is lower than that of the preset circuit, indicating that the modified circuit has relatively high reliability compared to the preset circuit. Moreover, since the tenth switch K10 in the modified circuit is also connected in series with an eleventh resistor R11, there are fewer potentially failing components in the balanced detection bridge, making it more reliable compared to the unbalanced detection bridge.

Referring to FIGs. 9 to 15, in some embodiments, there are a plurality of expectation thresholds, there are a plurality of expectation thresholds, including a first expectation threshold and a second expectation threshold, where the first expectation threshold is higher than the second expectation threshold. Determining whether to modify the preset circuit based on the comparison between the total failure expectation value of the preset circuit and the expectation thresholds includes:

S6110: When the total failure expectation value is greater than the first expectation threshold, modifying a plurality of target components in the preset circuit based on the difference between the total failure expectation value and the first expectation threshold;

S6120: When the total failure expectation value is lower than the first expectation threshold but higher than the second expectation threshold, determining to modify one target component in the preset circuit based on the relationship between the failure expectation value of each component and its corresponding preset component threshold;

S6130: When the total failure expectation value is lower than the second expectation threshold, not modifying the preset circuit.

In some embodiments, the first expectation threshold is the maximum critical value of the preset circuit, which means that when the total failure expectation value of the preset circuit is greater than the first expectation threshold, it indicates that its reliability is very poor and must be modified. The basis for modification is related to the difference between the total failure expectation value and the first expectation threshold. The larger this difference is, the poorer the reliability of the preset circuit is, and thus more components need to be modified. When selecting components based on the ranking of failure expectation values, the higher the preset ranking of a component, the more it needs to be modified. The setting of the preset ranking is proportional to the difference between the total failure expectation value and the first expectation threshold.

The second expectation threshold is the minimum critical value of the preset circuit. When the total failure expectation value of the preset circuit is lower than the second expectation threshold, it indicates that the reliability of the preset circuit is very good, and the circuit does not require any modification and can be directly applied.

Therefore, only when the total failure expectation value of the preset circuit is between the first expectation threshold and the second expectation threshold, it is necessary to further determine whether the circuit requires modification.

Referring to FIGs. 9 to 15, in some embodiments, determining whether to modify the preset circuit based on the relationship between the total failure expectation value of the preset circuit and the expectation threshold includes:

S6210: When the total failure expectation value is greater than the expectation threshold, modifying the preset circuit;

S6220: When the total failure expectation value is not greater than the expectation threshold, determining whether there exists a component whose failure expectation value is greater than its corresponding preset component threshold;

S6230: If such a component exists, modifying the preset circuit; and

S6240: If no such component exists, not modifying the preset circuit. In some embodiments, when the total failure expectation value of the preset circuit is determined to be between the first expectation threshold and the second expectation threshold, the device begins to analyze the failure expectation value of each component in the circuit. A component failure threshold corresponding to each component is set in the device to measure reliability of each component. When the failure expectation value of each component is lower than its corresponding component failure threshold, it indicates that each component in the preset circuit has good reliability and is not likely to fail during long-term operation of the circuit. In this case, the preset circuit does not need modification and can be directly put into application.

When there is at least one component whose failure expectation value is greater than its corresponding component failure threshold, it indicates that there are low-reliability components in the preset circuit. During the operation of the circuit, it is likely that the circuit will be prone to fail due to the high failure rate of this component. In this case, the preset circuit needs to modify the component whose failure expectation value is greater than the component failure threshold by altering its connection configuration with surrounding components to reduce the failure expectation value of the component until the failure expectation value of the component is lower than the corresponding component failure threshold.

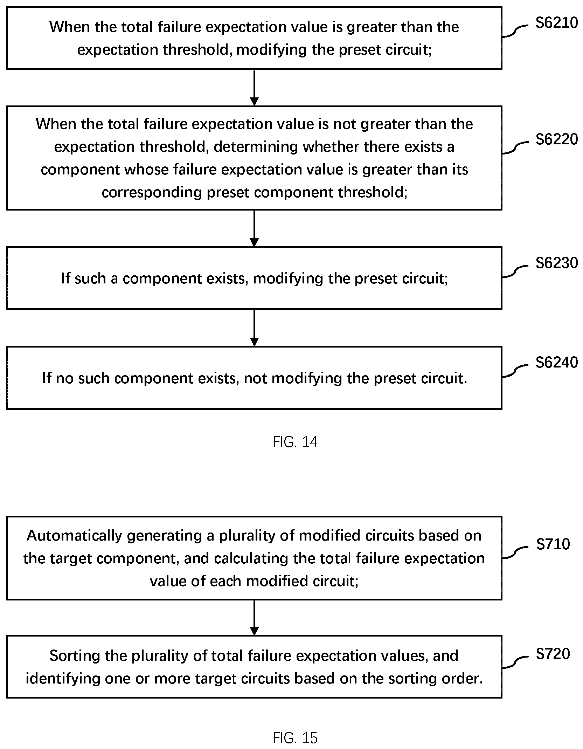

Referring to FIGs. 9 and 14, in some embodiments, after determining the failure expectation value for each component based on the failure rate and the corresponding failure coefficient of each component, the method further includes:

S710: Automatically generating a plurality of modified circuits based on the target component, and calculating the total failure expectation value of each modified circuit; and

S720: Sorting the plurality of total failure expectation values, and identifying one or more target circuits based on the sorting order.

In some embodiments, automatically generating a plurality of modified circuits can be achieved by layout based on the input component parameters. Since the result is not unique when automatically generating the second insulation detection circuit, and it cannot be determined whether the generated second insulation detection circuit is the circuit required by the user, therefore, when obtaining a plurality of modified circuits, the total expectation value of the circuit can be calculated to determine the effect of reliability improvement. The circuit with the highest reliability, that is, the lowest total failure expectation value, can be selected as the target circuit required by the user.

Referring to FIG. 18, the present application also discloses a processing apparatus for circuit reliability, including:

a parameter acquisition module 810, configured to obtain a failure rate and a corresponding failure coefficient for each component in a preset circuit;

a processing module 820, configured to determine a failure expectation value for each component based on the failure rate and the corresponding failure coefficient of each component; and

an execution module 830, configured to compare a plurality of failure expectation values, to identify a component to be modified in the preset circuit, and to reduce the failure expectation value of the component to be modified based on the failure coefficient of the component to be modified.

In some embodiments, the parameter acquisition module 810 may include a memory; the processing module 820 may include a main control chip, processor, or the like; and the execution module 830 may include a comparison circuit integrated in the main control chip.

The processing apparatus for circuit reliability can be connected to industrial control computers, home PCs, or the like. When processing reliability of the circuit, the circuit to be modified is input into the processing apparatus as a preset circuit through interactive devices such as industrial control computers, home PCs, or the like, enabling the processing apparatus to identify each component in the preset circuit. The parameter acquisition module 810 obtains the failure rate and corresponding failure coefficient of each component in the preset circuit based on the identified component type, and outputs the failure rate and corresponding failure coefficient of each component in the preset circuit to the processing module 820. This enables the processing module 820 to determine the failure expectation value of each component based on the failure rate and corresponding failure coefficient of each component. After determining the failure expectation value of each component through the processing module 820, the execution module 830 compares these failure expectation values to identify the target component that needs to be modified in the preset circuit.

The present application also discloses a non-transitory computer-readable storage medium storing a computer program. When the computer program is executed by a processor, it causes the processor to perform the processing method for circuit reliability as described above. The specific structure of this processing method for circuit reliability is referred to in the aforementioned embodiments. Since this storage medium incorporates all the technical solutions of the above-mentioned embodiments, it therefore possesses at least all the beneficial effects brought about by the technical solutions of the above-mentioned embodiments, which will not be repeated here individually.

The present application also discloses an electronic device, including a processor and a memory storing a computer program, where the processor is configured to execute the computer program to perform the processing method for circuit reliability as described above. The specific structure of this processing method for circuit reliability is referred to in the aforementioned embodiments. Since this electronic device incorporates all the technical solutions of the above-mentioned embodiments, it therefore possesses at least all the advantageous effects brought about by the technical solutions of the above-mentioned embodiments, which will not be repeated here individually.

The above embodiments of the present application have been described in detail. Specific examples have been used to illustrate the principles and implementation methods of the present application. The above description of the embodiments is only intended to aid in understanding the method and core ideas of the present application. For those skilled in the art, based on the concepts of the present application, there may be variations in specific implementation methods and application scope. In summary, the content of this specification should not be construed as limiting the scope of the present application.

**Claims**

1. A processing method for circuit reliability, comprising:

   obtaining a failure rate and a corresponding failure coefficient for each of components in a preset circuit;
   determining a failure expectation value for each of the components based on the failure rate and the corresponding failure coefficient of each of the components; and
   comparing a plurality of failure expectation values to identify a component to be modified in the preset circuit, and reducing the failure expectation value of the component to be modified based on the failure coefficient of the component to be modified.

2. The processing method for circuit reliability of claim 1, wherein the components comprise first components and second components; and wherein the obtaining the failure rate and the corresponding failure coefficient for each of the components in the preset circuit comprises: obtaining a failure rate and a corresponding failure coefficient for each of the first components in the preset circuit;

the determining the failure expectation value for each of the components based on the failure rate and the corresponding failure coefficient of each of the components comprises:

determining a failure expectation value for each of the first components based on the failure rate and the corresponding failure coefficient of each of the first components; and

the comparing the plurality of failure expectation values to identify a component to be modified in the preset circuit, and the reducing the failure expectation value of the component to be modified based on the failure coefficient of the component to be modified comprises: comparing the plurality of failure expectation values to identify a first component to be modified in the preset circuit as a target first component, wherein the target first component is the component to be modified, and replacing the first component with a second component based on the failure coefficient of the target first component, wherein the failure coefficient of the second component is smaller than the failure coefficient of the first component.

3. The processing method for circuit reliability of claim 2, wherein the obtaining the failure coefficient corresponding to each of the first components in the preset circuit comprises:

obtaining all possible failure scenarios for each of the first components based on a preset standard failure mode, and a failure proportion corresponding to each of the failure scenarios;

obtaining a circuit connection configuration of each of the first components in the preset circuit, and determining a plurality of target failure scenarios of the first component presented during operation based on the circuit connection configuration; and

determining the failure coefficient of the first component based on the sum of failure proportions of the plurality of target failure scenarios corresponding to each of the first components.

4. The processing method for circuit reliability of claim 3, wherein the replacing the first component with a second component based on the failure coefficient of the first component comprises:

obtaining a plurality of target failure scenarios corresponding to the failure coefficient of the target first component; and

determining the second component to be used for replacing based on the remaining plurality of target failure scenarios after eliminating one or more target failure scenarios.

5. The processing method for circuit reliability of claim 4, wherein the target first component is a photo-MOS component, the second component is a relay, and the determining the second component to be used for replacing based on the remaining plurality of target failure scenarios after eliminating one or more target failure scenarios comprises:

when the first component is a photo-MOS component, identifying that the target failure scenarios of the photo-MOS component comprise at least one of switch drift and switch open circuit; and

identifying a relay as the component corresponding to a target failure scenario that does not comprise switch drift or switch open circuit, and selecting the relay as the second component.

6. The processing method for circuit reliability of claim 3, wherein the replacing the first component with a second component based on the failure scenarios in the failure coefficient of the first component comprises:

sorting the failure proportions corresponding to a plurality of target failure scenarios of the target first component in a descending order to generate a sorted queue;

based on the order of the queue, identifying the target failure scenarios corresponding to failure proportions ranked a head of a preset ranking in the queue as target failure scenarios to be modified; and

determining the second component to be used for replacing based on the failure proportions of a plurality of target failure scenarios after mitigating one or more target failure scenarios to be modified.

7. The processing method for circuit reliability of claim 2, wherein after the comparing the plurality of failure expectation values to identify the target first component to be modified in the preset circuit, the method further comprises: replacing the first component with a third component based on the failure rate of the target first component, wherein the failure rate of the third component is lower than the failure rate of the first component.

8. The processing method for circuit reliability of claim 2, wherein after the determining the failure expectation value for each of the first components based on the failure rate and the corresponding failure coefficient of each of the first components, the method further comprises:

obtaining a total failure expectation value of the preset circuit based on the failure expectation value, the failure rate, and the corresponding failure coefficient of each of the first components; and
based on a relationship between an expectation threshold and the total failure expectation value of the preset circuit, determining whether to modify the preset circuit.

9. The processing method for circuit reliability of claim 2, wherein the circuit resulting from replacing the first component with the second component comprises a first insulation detection circuit, the first insulation detection circuit comprising:

a first resistor and a second resistor, wherein a first terminal of the first resistor is connected to a first terminal of a positive bus-to-ground resistor, a second terminal of the first resistor is connected to a first terminal of the second resistor, and a second terminal of the second resistor is connected to a first terminal of a negative bus-to-ground resistor;
a third resistor, wherein a first terminal of the third resistor is electrically connected to both the first terminal of the positive bus-to-ground resistor and the first terminal of the first resistor, and a second terminal of the third resistor is connected to both the second terminal of the first resistor and the first terminal of the second resistor; and
a first switch and a second switch, wherein a first terminal of the second switch is connected to the second terminal of the third resistor, a second terminal of the second switch is connected to a first terminal of the first switch, the second terminal of the first resistor, and the first terminal of the second resistor, and a second terminal of the first switch is grounded.

10. The processing method for circuit reliability of claim 9, wherein:

in a first operational state of the first insulation detection circuit, the first switch is in the closed state and the second switch is in the open state; and
in a second operational state of the first insulation detection circuit, both the first switch and the second switch are in the closed state.

11. The processing method for circuit reliability of claim 10, wherein the first switch and the second switch are relays.

12. The processing method for circuit reliability of claim 11, wherein the relays are encapsulated using automotive-grade plastic packaging.

13. The processing method for circuit reliability of claim 11, wherein:

in the first operational state of the first insulation detection circuit, the failure modes of the first resistor, the second resistor, and the third resistor all comprise resistor open circuit and resistor parameter drift, the failure mode of the first switch comprises relay functional fault, and the failure mode of the second switch comprises relay short-circuit; and
in the second operational state of the first insulation detection circuit, the failure modes of the first resistor, the second resistor, and the third resistor all comprise resistor open circuit and resistor parameter drift, and the failure modes of both the first switch and the second switch comprise relay functional fault.

14. The processing method for circuit reliability of claim 13, wherein among the failure modes of the first switch and the second switch, the proportion of relay short-circuit is lower than the proportion of relay functional fault.

15. The processing method for circuit reliability of claim 13, wherein among the failure modes of the first resistor, the second resistor, and the third resistor, the proportion of resistor open circuit is higher than the proportion of parameter drift.

16. The processing method for circuit reliability of claim 9, wherein the first resistor, the second resistor, and the third resistor are carbon film resistors.

17. The processing method for circuit reliability of claim 1, wherein the comparing the plurality of failure expectation values to identify a component to be modified in the preset circuit, and reducing the failure expectation value of the component to be modified based on the failure coefficient of the component to be modified comprises:
comparing the plurality of failure expectation values to identify a target component to be modified in the preset circuit, and altering the circuit connection configuration of the target component based on the failure coefficient of the target component to reduce the failure expectation value of the target component.

18. The processing method for circuit reliability of claim 17, wherein the obtaining the failure coefficient corresponding to each of the components in the preset circuit comprises:

obtaining all possible failure scenarios for each of the components based on a preset standard failure mode, and a failure proportion corresponding to each of the failure scenarios;
obtaining the circuit connection configuration of each of the components in the preset circuit, and determining a plurality of target failure scenarios presented during operation based on the circuit connection configuration; and
based on the sum of failure proportions of the plurality of target failure scenarios corresponding to each of the components, determining the failure coefficients of the components.

19. The processing method for circuit reliability of claim 17, wherein the comparing the plurality of failure expectation values comprises:

sorting the plurality of failure expectation values in a descending order to generate a sorted queue;
based on the order of the queue, according to the circuit connection configuration of the component corresponded to the failure expectation value, sequentially determining whether the component can be modified, to identify a preset number of modifiable target components; and/or,
selecting, based on the order of the queue, the components corresponding to failure expectation values ranked ahead of a preset ranking as the target components.

20. The processing method for circuit reliability of claim 19, wherein the altering the circuit connection configuration of the target component based on the failure coefficient of the target component specifically comprises:
modifying the circuit connection configuration between the target component and surrounding components based on the failure proportion of the target failure scenarios of the component.

21. The processing method for circuit reliability of claim 17, wherein after the determining the failure expectation value for each of the components based on the failure rate and the corresponding failure coefficient of each of the components, the method further comprises:

obtaining a total failure expectation value of the preset circuit based on the failure expectation value, failure rate, and the corresponding failure coefficient of each of the components; and
determining whether to modify the preset circuit based on a relationship between the total failure expectation value of the preset circuit and an expectation threshold.

22. The processing method for circuit reliability of claim 21, wherein there are a plurality of expectation thresholds comprising a first expectation threshold and a second expectation threshold, the first expectation threshold is higher than the second expectation threshold, and the determining whether to modify the preset circuit based on the relationship between the total failure expectation value of the preset circuit and the expectation thresholds comprises:

when the total failure expectation value is greater than the first expectation threshold, modifying a plurality of the target components in the preset circuit based on the difference between the total failure expectation value and the first expectation threshold;
when the total failure expectation value is lower than the first expectation threshold but higher than the second expectation threshold, determining to modify one target component in the preset circuit based on the relationship between the failure expectation value of each of the components and the corresponding preset component threshold of each of the components; and
when the total failure expectation value is lower than the second expectation threshold, not modifying the preset circuit.

23. The processing method for circuit reliability of claim 21, wherein the determining whether to modify the preset circuit based on the relationship between the total failure expectation value of the preset circuit and the expectation threshold comprises:

when the total failure expectation value is greater than the expectation threshold, modifying the preset circuit; when the total failure expectation value is not greater than the expectation threshold, determining whether there exists a component whose failure expectation value is greater than the corresponding preset component threshold of the component;
if such a component exists, modifying the preset circuit; and
if no such component exists, not modifying the preset circuit.

24. The processing method for circuit reliability of claim 17, wherein after the determining the failure expectation value for each of the components based on the failure rate and the corresponding failure coefficient of each of the components, the method further comprises:

automatically generating a plurality of modified circuits based on the target component, and calculating a total failure expectation value for each of the modified circuits; and
sorting the plurality of total failure expectation values, and identifying one or more target circuits based on the sorting order.

25. The processing method for circuit reliability of claim 17, wherein the preset circuit after altering the circuit connection configuration of the target component comprises a second insulation detection circuit, the second insulation detection circuit comprising:

a fourth resistor, a fifth resistor and a sixth resistor, wherein a first terminal of the fourth resistor is connected to a first terminal of a positive bus-to-ground resistor, a second terminal of the fifth resistor is connected to a first terminal of the sixth resistor, and a second terminal of the sixth resistor is connected to a second terminal of a negative bus-to-ground resistor;
a seventh resistor, wherein a second terminal of the seventh resistor is connected to a first terminal of the fifth resistor;
a fifth switch and a sixth switch, wherein a first terminal of the fifth switch is connected to a second terminal of the sixth switch, the second terminal of the fifth resistor and the second terminal of the seventh resistor, a second terminal of the fifth switch is grounded, and a first terminal of the sixth switch is connected to a second terminal of the fourth resistor; and
a seventh switch, wherein a first terminal of the seventh switch is connected to the second terminal of the fourth resistor and the first terminal of the sixth switch, and a second terminal of the seventh switch is connected to a first terminal of the seventh resistor.

26. The processing method for circuit reliability of claim 25, wherein:

when the seventh switch experiences an open circuit failure, the fifth switch and the seventh switch form an unbalanced detection bridge,
in a first operational state of the unbalanced detection bridge, the fifth switch is in the closed state, and the sixth switch is in the open state; and
in a second operational state of the unbalanced detection bridge, both the fifth switch and the sixth switch are in the closed state.

27. The processing method for circuit reliability of claim 26, wherein:

in the first operational state of the unbalanced detection bridge, the failure modes of the fourth resistor, the fifth resistor, the sixth resistor, and the seventh resistor all comprise resistor open circuit and resistor parameter drift, the failure modes of the fifth switch comprise switch open circuit and switch parameter drift, the failure mode of the sixth switch comprises parameter drift, and the failure mode of the seventh switch comprises switch short-circuit;
in the second operational state of the unbalanced detection bridge, the failure modes of the fourth resistor, the fifth resistor, the sixth resistor, and the seventh resistor all comprise resistor open circuit and resistor parameter drift, the failure modes of the fifth switch comprise switch open circuit and switch parameter drift, and the failure modes of both the sixth switch and the seventh switch comprise switch short-circuit and switch parameter drift.

**28.** The processing method for circuit reliability of claim 25, wherein:

when the sixth switch experiences an open circuit failure, the fifth switch and the seventh switch form a balanced detection bridge;
in a first operational state of the balanced detection bridge, the fifth switch is in the closed state, and the seventh switch is in the open state; and
in a second operational state of the balanced detection bridge, both the fifth switch and the seventh switch are in the closed state.

**29.** The processing method for circuit reliability of claim 28, wherein:

in the first operational state of the balanced detection bridge, the failure modes of the fourth resistor, the fifth resistor, the sixth resistor, and the seventh resistor all comprise resistor open circuit and resistor parameter drift, the failure modes of the fifth switch comprise switch open circuit and switch parameter drift, the failure mode of the sixth switch comprises switch short-circuit, and the failure mode of the seventh switch comprises switch parameter drift;
in the second operational state of the balanced detection bridge, the failure modes of the fourth resistor, the fifth resistor, the sixth resistor, and the seventh resistor all comprise resistor open circuit and resistor parameter drift, the failure modes of the fifth switch comprise switch open circuit and switch parameter drift, and the failure modes of both the sixth switch and the seventh switch comprise switch short-circuit and switch parameter drift.

**30.** The processing method for circuit reliability of claim 29, wherein:
among the failure modes of the fourth resistor, the fifth resistor, the sixth resistor, and the seventh resistor, the proportion of resistor open circuit is 60% and the proportion of resistor parameter drift is 40%.

**31.** The processing method for circuit reliability of claim 29, wherein:
among the failure modes of the fifth switch, the sixth switch, and the seventh switch, the proportion of short-circuit is 10%, the proportion of switch open circuit is 50%, and the proportion of switch parameter drift is 40%.

**32.** The processing method for circuit reliability of claim 25, wherein:

the fourth resistor, the fifth resistor, the sixth resistor and the seventh resistor are carbon film resistors; and
the fifth switch, the sixth switch and the seventh switch are photo-MOS components.

**33.** A processing apparatus for circuit reliability, comprising:

a parameter acquisition module configured to obtain a failure rate and a corresponding failure coefficient for each of the components in a preset circuit;
a processing module configured to determine a failure expectation value for each of the components based on the failure rate and the corresponding failure coefficient of each of the components; and
an execution module configured to compare a plurality of failure expectation values, identify a component to be modified in the preset circuit, and reduce the failure expectation value of the component to be modified based on the failure coefficient of the component to be modified.

**34.** A storage medium storing a computer program, wherein when the computer program is executed by a processor, it causes the processor to perform the processing method for circuit reliability of any one of claims 1 to 32.

**35.** An electronic device, comprising:

a processor; and
a memory storing a computer program;
wherein the processor is configured to execute the computer program to perform the processing method for circuit reliability of any one of claims 1 to 32.

Obtaining a failure rate and a corresponding failure coefficient for each of the first components in the preset circuit; — S100

↓

Determining a failure expectation value for each of the first components based on the failure rate and the corresponding failure coefficient of each of the first components; — S200

↓

Comparing a plurality of failure expectation values to identify a first component to be modified in the preset circuit as a target first component, where the target first component is the component to be modified, and replacing the first component with a second component based on the failure coefficient of the target first component. — S300

FIG. 1

Obtaining all possible failure scenarios for each of the first components and the failure proportion corresponding to each failure scenario based on a preset standard failure mode; — S110

↓

Obtaining the circuit connection configuration of each of the first components in the preset circuit, and determining at least one target failure scenario of the first component presented during operation based on the circuit connection configuration; — S120

↓

Based on the sum of failure proportions of at least one target failure scenario corresponding to each of the first components, determining the failure coefficients of the first components. — S130

FIG. 2

Obtaining a plurality of target failure scenarios corresponding to the failure coefficient of the target first component; — S310

↓

Determining the second component to be used for replacing based on at least one remaining target failure scenario after eliminating one or more target failure scenarios. — S320

FIG. 3

When the first component is a MOS component, identifying that the target failure scenarios of the photo-MOS component include at least one of switch drift and switch open circuit; — S321

↓

Identifying a relay as one component corresponding to a target failure scenario that does not include switch drift or switch open circuit, and selecting the relay as the second component. — S322

FIG. 4

Sorting the failure proportions corresponding to a plurality of target failure scenarios of the target first component in descending order to generate a sorted queue; — S330

↓

Based on the order of the queue, identifying the target failure scenarios corresponding to failure proportions ranked ahead of a preset ranking as target failure scenarios to be modified; — S340

↓

Determining the second component to be used for replacing based on the failure proportions of a plurality of target failure scenarios after mitigating one or more target failure scenarios to be modified. — S350

FIG. 5

Obtaining a total failure expectation value of the preset circuit
based on the failure expectation value, the failure rate, and the
corresponding failure coefficient of each of the first components;     S500

Determining whether to modify the preset circuit, based on the
relationship between an expectation threshold and the total failure
expectation value of the preset circuit.     S600

FIG. 6

Rx     R1     R3

K1     K2

Ry     R2     R41

FIG. 7

FIG. 8

Obtaining the failure rate and a corresponding failure coefficient for each component in the preset circuit; — S1000

Determining a failure expectation value for each component based on the failure rate and the corresponding failure coefficient of each component; — S2000

Comparing a plurality of failure expectation values to identify a target component to be modified in the preset circuit, and altering the connection configuration of the target component based on the failure coefficient of the target component to reduce the failure expectation value of the target component. — S3000

FIG. 9

Obtaining all possible failure scenarios for each component and the failure proportion corresponding to each failure scenario based on a preset standard failure mode;     S1100

Obtaining the circuit connection configuration of each component in the preset circuit, and determining a plurality of target failure scenarios of the component presented during operation based on the circuit connection configuration;     S1200

Based on the sum of failure proportions of a plurality of target failure scenarios corresponding to each of the components, determining the failure coefficients of the components.     S1300

FIG. 10

Sorting the plurality of failure expectation values in descending order to generate a sorted queue;     S3100

Based on the order of the queue, according to the circuit connection configuration of the component corresponded to the failure expectation value, sequentially determining whether the component can be modified, to identify a preset number of modifiable target components;     S3200

Based on the order of the queue, selecting the components corresponding to failure expectation values ranked ahead of a preset ranking as target components.     S3300

FIG. 11

Obtaining the total failure expectation value of the preset circuit based on the failure expectation value, failure rate, and the corresponding failure coefficient of each component;    S5000

Determining whether to modify the preset circuit based on the relationship between the total failure expectation value of the preset circuit and the expectation threshold.    S6000

FIG. 12

When the total failure expectation value is greater than the first expectation threshold, modifying a plurality of target components in the preset circuit based on the difference between the total failure expectation value and the first expectation threshold;    S6110

When the total failure expectation value is lower than the first expectation threshold but higher than the second expectation threshold, determining to modify one target component in the preset circuit based on the relationship between the failure expectation value of each component and its corresponding preset component threshold;    S6120

When the total failure expectation value is lower than the second expectation threshold, not modifying the preset circuit.    S6130

FIG. 13

When the total failure expectation value is greater than the expectation threshold, modifying the preset circuit; — S6210

When the total failure expectation value is not greater than the expectation threshold, determining whether there exists a component whose failure expectation value is greater than its corresponding preset component threshold; — S6220

If such a component exists, modifying the preset circuit; — S6230

If no such component exists, not modifying the preset circuit. — S6240

FIG. 14

Automatically generating a plurality of modified circuits based on the target component, and calculating the total failure expectation value of each modified circuit; — S710

Sorting the plurality of total failure expectation values, and identifying one or more target circuits based on the sorting order. — S720

FIG. 15

FIG. 16

FIG. 17

Processing Apparatus For Circuit Reliability

810                    820                    830

Preset Circuit → Parameter Acquisition Module → Processing Module → Execution Module → Target Circuit

FIG. 18

## INTERNATIONAL SEARCH REPORT

| International application No. |
|---|
| **PCT/CN2024/120378** |

| A. | CLASSIFICATION OF SUBJECT MATTER |
|---|---|

G01R35/02(2006.01)i; G01R31/14(2006.01)i

According to International Patent Classification (IPC) or to both national classification and IPC

| B. | FIELDS SEARCHED |
|---|---|

Minimum documentation searched (classification system followed by classification symbols)

IPC:G01R

Documentation searched other than minimum documentation to the extent that such documents are included in the fields searched

Electronic data base consulted during the international search (name of data base and, where practicable, search terms used)

CNTXT; CNABS; CNKI; WPABS; ENTXT; ENTXTC; IEEE: 惠州亿纬, 胡俊, 申睿章, 李汉林, 杨冠宇, 胡浩, 电路, 可靠性, 有效性, 失效率, 失效系数, 失效期望值, 失效, 阈值, 阀值, 比较, 对比, 比对, 占比, circuit?, reliability, compar+, failure, coefficient, rate, value

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117269873 A (EVE ENERGY CO., LTD.) 22 December 2023 (2023-12-22)<br>claims 1-11 | 1-3, 17-24, 33-35 |
| PY | CN 117269873 A (EVE ENERGY CO., LTD.) 22 December 2023 (2023-12-22)<br>claims 1-11 | 4-16, 25-35 |
| PY | CN 117388786 A (EVE ENERGY CO., LTD.) 12 January 2024 (2024-01-12)<br>claims 1-10 | 4-8, 34, 35 |
| PY | CN 220894450 U (EVE ENERGY CO., LTD.) 03 May 2024 (2024-05-03)<br>claims 1-10 | 9-16, 34, 35 |
| PY | CN 220894449 U (EVE ENERGY CO., LTD.) 03 May 2024 (2024-05-03)<br>claims 1-10 | 25-32, 34, 35 |
| A | CN 116738930 A (BINJIANG INSTITUTE OF ZHEJIANG UNIVERSITY) 12 September 2023 (2023-09-12)<br>description, paragraphs [0008]-[0134] | 1-35 |

| ✓ Further documents are listed in the continuation of Box C. | ✓ See patent family annex. |
|---|---|

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 November 2024** | **27 November 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/120378**

**C.     DOCUMENTS CONSIDERED TO BE RELEVANT**

| Category* | Citation of document, with indication, where appropriate, of the relevant passages | Relevant to claim No. |
|---|---|---|
| A | CN 115311218 A (JIANGSU XUGONG GUOZHONG LABORATORY TECHNOLOGY CO., LTD.) 08 November 2022 (2022-11-08)<br>entire document | 1-35 |
| A | CN 116644590 A (NATIONAL UNIVERSITY OF DEFENSE TECHNOLOGY OF PLA) 25 August 2023 (2023-08-25)<br>entire document | 1-35 |
| A | US 10852351 B1 (IBM) 01 December 2020 (2020-12-01)<br>entire document | 1-35 |
| A | US 2022120796 A1 (CONTEMPORARY AMPEREX TECHNOLOGY CO., LTD.) 21 April 2022 (2022-04-21)<br>entire document | 1-35 |

Form PCT/ISA/210 (second sheet) (July 2022)

| | | INTERNATIONAL SEARCH REPORT | | | | International application No. |
| :--- | :--- | :--- | :--- | :--- | :--- | :--- |
| | | Information on patent family members | | | | **PCT/CN2024/120378** |

| Patent document cited in search report | | | Publication date (day/month/year) | Patent family member(s) | | | Publication date (day/month/year) |
| :--- | :--- | :--- | :--- | :--- | :--- | :--- | :--- |
| CN | 117269873 | A | 22 December 2023 | None | | | |
| CN | 117388786 | A | 12 January 2024 | None | | | |
| CN | 220894450 | U | 03 May 2024 | None | | | |
| CN | 220894449 | U | 03 May 2024 | None | | | |
| CN | 116738930 | A | 12 September 2023 | None | | | |
| CN | 115311218 | A | 08 November 2022 | None | | | |
| CN | 116644590 | A | 25 August 2023 | None | | | |
| US | 10852351 | B1 | 01 December 2020 | US | 2020379041 | A1 | 03 December 2020 |
| US | 2022120796 | A1 | 21 April 2022 | US | 11733279 | B2 | 22 August 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311231712X
- CN 202322584916
- CN 202322583013
- CN 202311230696